# EUROPÄISCHE PATENTSCHRIFT

(11) **EP 2 568 542 B1**
(45) Veröffentlichungstag und Bekanntmachung des Hinweises auf die Patenterteilung: **28.11.2018**
(21) Anmeldenummer: 11007285.7
(22) Anmeldetag: 07.09.2011
(51) Int. Cl.: H01R 12/67, H02J 4/00, H01R 13/713

(54) **Abzweigvorrichtung und Installationssatz zum elektrischen Verbinden einer Abzweigleitung mit einer Durchgangsleitung**
Branching device and installation kit for electrically connecting a branch line with a through circuit
Dispositif de dérivation et ensemble d'installation pour le raccordement électrique d'une dérivation avec une ligne traversante

(43) Veröffentlichungstag der Anmeldung: 13.03.2013
(73) Patentinhaber: Woertz AG, 4132 Muttenz 1 (CH)
(72) Erfinder: Onodi, Tamas, 8800 Thalwil (CH)
(74) Vertreter: Samson & Partner Patentanwälte mbB

(56) Entgegenhaltungen:
- EP-A2- 1 648 052
- EP-A2- 2 375 517
- WO-A1-2011/091738
- DE-A1-102007 029 047
- US-A- 6 140 905
- US-A1- 2002 127 917
- US-A1- 2007 006 603
- US-B1- 6 204 747

## Beschreibung

### Gebiet der Erfindung

Die Erfindung betrifft eine Abzweigvorrichtung und einen Installationssatz zum elektrischen Verbinden einer Abzweigleitung mit einer Durchgangsleitung sowie eine elektrische Installation mit dem Installationssatz.

### Hintergrund der Erfindung

Eine Vielzahl von verteilt angeordneten elektrischen Verbrauchern, wie beispielsweise Leuchten entlang eines Tunnels, lässt sich elektrisch installieren, indem von einer gemeinsamen Durchgangsleitung aus Abzweigleitungen zu den einzelnen Verbrauchern hin verlegt werden. Hierbei dient die Durchgangsleitung der gemeinsamen Versorgung aller dieser Verbraucher, wobei beispielsweise zwei zueinander beabstandete Verbraucher über separate Abzweigleitungen an die Durchgangsleitung angeschlossen sind.

Bei einem Brandfall in einem Teilbereich einer solchen elektrischen Installation sollen (zumindest) diejenigen Verbraucher, die außerhalb des Brandbereichs liegen, funktionsmäßig nicht beeinträchtigt werden, und zwar auch dann nicht, wenn im Brandbereich ein oder mehrere Verbraucher oder deren zugehörige Abzweigleitung durch den Brand beschädigt wird bzw. werden.

Die Eignung der elektrischen Installation zur Stromversorgung auch unter Brandeinwirkung wird i.a. als "Funktionserhalt" (engl.: "Circuit Integrity") bezeichnet. Der Funktionserhalt ist durch verschiedene Normen standardisiert.

Beispielsweise werden Kabel gemäß der Norm IEC 60331-11/-21/-23/-25 mit Spannung beaufschlagt und unter Flammeneinwirkung einer Temperatur größer 750°C über 90-180 Min. ausgesetzt. Nach einiger Zeit verlieren die Aderisolationen des Kabels aufgrund der Flammeneinwirkung ihre Isolationsfähigkeit und es kommt zum Kurzschluss zwischen Kabeladern; dies bedeutet Funktionsverlust. Hierbei ist also der Funktionsverlust durch den Isolationsverlust bedingt. Dementsprechend ist der Funktionserhalt (eines Kabels) im Wesentlichen durch den Isolationserhalt des Kabels bestimmt. Das Verhalten unter diesem Test wird mit der Angabe der Dauer des Isolationserhalts in Minuten angegeben. Ähnliche Normen sind BS 6387 cat. C und VDE 0472-814.

Andere Normen betreffen den Funktionserhalt von Kabeln unter Einwirkung von Feuer und Wasser (womit z.B. die Wirkung von Sprinkleranlagen bei einem Brand dargestellt werden soll), so z.B. DS 6387 cat. W und VdS 3423. Weitere Normen betreffen Funktionserhalt von Kabeln unter Einwirkung von Feuer und mechanischen Stößen (womit beispielsweise die Wirkung von auf das Kabel herunterfallenden Teilen dargestellt werden soll, wie es bei einem Brand oft vorkommt), so EN 50200, EN 50362, und ES 6387 cat. Z.

Daneben gibt es Normen, welche den Funktionserhalt nicht nur von Kabeln, sondern ganzer Installationssysteme betreffen. Dies bezeichnet man auch als "System-Funktionserhalt" (engl.: "System Circuit Integrity"). Beim System-Funktionserhalt sind neben dem Kabel tragende Elemente (wie Kabelbefestigungen, -aufhängungen und -führungen) und elektrische Verbindungselemente (wie Verzweigungs- und Anschlussvorrichtungen) einbezogen, denn sie alle zusammen gewährleisten den Funktionserhalt einer gesamten Installation. Eine den System-Funktionserhalt betreffende Norm ist beispielsweise DIN 4102 Teil 12. Bei einem Test nach dieser Norm erfolgt die Beflammung und damit Erhitzung einer Gesamtinstallation auf einer Länge von 3 m gemäß einer bestimmten ansteigenden Einheitstemperaturkurve, die zunächst relativ steil ansteigt und dann immer flacher verläuft, bis sie nach 90 Min. ca. 900°C erreicht. Das Verhalten unter diesem Test wird durch "E" mit der Angabe der Dauer des Funktionserhalts in Minuten angegeben. "E90" bedeutet also System-Funktionserhalt über 90 Min.

Übliche Kabel oder auch Verbraucher erfüllen solche Funktionserhaltbedingungen nicht, da unter der Brandeinwirkung deren Isolationen rasch schmelzen oder abbrennen und es dann durch Leiterberührung zum Kurzschluss kommt. Es bedarf daher zur Kurzschlussvermeidung spezieller Ausrüstungen, beispielsweise spezieller Isolationen und/oder mechanischer Stützung stromführender Komponenten. Allgemein ist die Erzielung höherer Funktionserhaltdauem technisch anspruchsvoll. Entsprechendes gilt hinsichtlich der relativ hohen Anforderungen, die die Systemfunktionserhalt-Normen an tragende Elemente und Verbindungselemente stellen.

EP 1648052 A2 beschreibt einen Verbinder für ein Leistungsverteilungssystem.

US 2007/006603 A1 beschreibt eine Vorrichtung mit einem elektrischen Eingang und einem elektrischen Ausgang und einem Schalter dazwischen, sowie mit einem Temperatursensor und einer Steuerung, wobei der Schalter von der Steuerung in Abhängigkeit von einer mit dem Temperatursensor gemessenen Temperatur aktiviert bzw. deaktiviert wird.

US 2002/127917 A) beschreibt einen elektrischen Stecker mit einer Überstromsicherung.

WO 2001/091738 A1 beschreibt eine Steckdose mit Übertemperatur- und Überstromsicherung.

US 6 140 905 A beschreibt einen Kontaktstift mit Temperatursicherung zum Kontaktieren einer Batterie, um einen Lade- oder Entladevorgang der Batterie bei Temperaturanstieg der Batterie zu unterbrechen.

US 6,204,747 B1 beschreibt einen Adapter zum Vermindern von Brandgefahr bei Verwendung von Stromkreisen, welcher in Serie mit dem Stromkreis geschaltet den Strom bei Überhitzung unterbricht.

### Kurzfassung der Erfindung

Die Erfindung ist durch den unabhängigen Anspruch definiert.

Eine Abzweigvorrichtung zum elektrischen Verbinden einer Abzweigleitung mit einer Durchgangsleitung ist zum Funktionserhalt der Durchgangsleitung im Brandfall mit einer thermisch auslösenden Trennvorrichtung ausgerüstet ist, die die elektrische Verbindung zwischen der Abzweigleitung und der Durchgangsleitung bei Anstieg der Umgebungstemperatur bei einem vorbestimmten brandtypischen Wert selbsttätig trennt.

### Allgemeine Beschreibung der Anschlussvorrichtung und deren fakultativen Ausgestaltungen

Bei herkömmlichen Installationen werden von der Durchgangsleitung abgezweigte Leitungen (Abzweigleitungen) unmittelbar an der Durchgangsleitung angeschlossen. Beispielsweise sind jeweilige Adern der Durchgangsleitung mit jeweiligen Adern einer Abzweigleitung durch Schraubklemmen direkt miteinander elektrisch leitend verbunden.

Kommt es im Brandfall zu einem Kurzschluss in einer Abzweigleitung oder in einem an der Abzweigleitung angeschlossenen Verbraucher, etwa weil eine elektrische Isolation abgebrannt oder weggeschmolzen ist, so wirkt sich diese Störung auf die gesamte Durchgangsleitung aus. In diesem Fall werden auch weitere, nicht dem Brand ausgesetzte Verbraucher oder schlimmstenfalls elektrischen Installation insgesamt ausfallen, da durch den Kurzschluss (der Abzweigleitung bzw. des Verbrauchers) auch die Durchgangsleitung kurzgeschlossen wird.

Hiergegen sichert die Abzweigvorrichtung die Durchgangsleitung, indem eine im Brandbereich liegende Abzweigleitung automatisch von der Durchgangsleitung getrennt wird. Dadurch führt ein Kurzschluss, der von der Durchgangsleitung aus gesehen "hinter" der Abzweigvorrichtung (also etwa in der Abzweigleitung selbst oder in einem daran angeschlossenen Verbraucher) erfolgt, nicht zum Kurzschließen der Durchgangsleitung. Hierzu ist die Trennvorrichtung zum selbsttätigen Trennen der elektrischen Verbindung zwischen der Abzweigleitung und der Durchgangsleitung bei Anstieg der Umgebungstemperatur auf einen vorbestimmten brandtypischen Wert (sogenannte Trenntemperatur) eingerichtet.

Brandtypisch heißt, dass die Umgebungstemperatur nur im Brandfall einen solchen Wert erreicht (oder auch überschreitet) und außerdem auch, dass die Trenntemperatur über denjenigen Temperaturen liegt, die im Betrieb ohne Brand auftreten können. In diesen Sinn bezeichnet der "Brandbereich" einen Bereich (einen räumlichen Bereich der elektrischen Installation), in dem im Brandfall brandtypische Temperaturen auftreten, insbesondere zumindest die Trenntemperatur erreicht wird. Bei manchen Ausgestaltungen der Abzweigvorrichtung beträgt der brandtypische Wert, also die Trenntemperatur, beispielsweise 70°C, 80° C, 100° C, 120° C, 150° C, 180° C, 250° C oder auch höhere Temperaturen. Bei einigen Ausgestaltungen sind auch niedrigere Trenntemperaturen vorgesehen, beispielsweise falls ein Brand besonders rasch festgestellt werden soll und/oder falls die im Betrieb auftretenden Umgebungstemperaturen einen entsprechend niedrigeren Wert üblicherweise nicht überschreiten, etwa in Tunnels und/oder bei kühlen klimatischen Bedingungen.

Im Übrigen ist die Abzweigvorrichtung insbesondere so eingerichtet, dass vor Auslösen der Trennvorrichtung die elektrische Verbindung zwischen Abzweigleitung und Durchgangsleitung durchgeschaltet ist.

Nachfolgend wird zur besseren Lesbarkeit bei einer Abzweigung der in elektrischer Hinsicht von der Durchgangsleitung aus gesehene Teil hinter der Trennvorrichtung, der im Wesentlichen die Abzweigleitung, daran angeschlossene Verbraucher sowie eine Anschlussvorrichtung der Abzweigvorrichtung zum Anschließen der Abzweigleitung umfasst, kurz als "Abzweig" bezeichnet.

Hinsichtlich des Funktionserhalts unter Einwirkung von Feuer lassen sich aufgrund der Abzweigvorrichtung geringere Anforderungen an den Abzweig stellen, da dessen Funktionsverlust (z.B. Kurzschluss) aufgrund der thermisch ausgelöste Trennung nicht zu einem Funktionsverlust der Durchgangsleitung führen kann. Dementsprechend gestattet die Abzweigvorrichtung die Verwendung von (günstigeren und einfacheren) Abzweigleitungen und Verbrauchern, die gegenüber der Durchgangsleitung eine reduzierte Funktionserhaltdauer im Brandfall besitzen.

Insgesamt stellt also die Trennvorrichtung eine thermisch auslösende Absicherung dar, da sie zum Auslösen bei einer bestimmten Umgebungstemperatur, nämlich der Trenntemperatur, eingerichtet ist. Sie unterscheidet sich von üblichen Überstromabsicherungen beispielsweise dadurch, dass sie im Wesentlichen stromunabhängig arbeitet.

Bei einer bestimmten Temperatur auslösende elektrische Trennvorrichtungen sind an sich bekannt; beispielsweise trennen die sog. "Thermal Links", die unter der Marke "Elmwood" vertrieben werden, die elektrische Verbindung zwischen ihren beiden Anschlüssen irreversibel, wenn sie über die bestimmte Temperatur erhitzt werden. Solche thermische Trennvorrichtungen sind für unterschiedliche Trenntemperaturen und auch für unterschiedliche Strom- und Spannungsklassen verfügbar. Üblicherweise werden sie dazu verwendet, bei einer Schaltung, die sich durch hohen Stromfluss selbst erwärmt, wärmeempfindliche Bauelemente der Schaltung vor Zerstörung zu schützen.

Mit der erfindungsgemäßem Abzweigvorrichtung wird im Brandfall der Abzweig auch dann stromlos geschaltet (sofern die stromführenden Adern durch die Trennvorrichtung trennbar angeschlossen sind, siehe unten), wenn (noch) überhaupt kein Kurzschluss durch den Brand im Abzweig verursacht wurde. Das ist beispielsweise bei Löscharbeiten oder bei durch Brandeinwirkung heruntergefallenen Abzweigleitungen oder Verbrauchern nützlich, falls deren Isolierung durch den Brand beschädigt ist und so eine elektrische Gefahr bei Berührung besteht.

Im Übrigen ließe sich zwar auch mit einer Überstromsicherung die Durchgangsleitung vor einem Kurzschluss im Abzweig schützen. Allerdings kommt es z.B. oft zu einem kurzzeitigen Kurzschluss, wenn ein Leuchtmittel am Ende seiner Lebensdauer kaputt geht. Wenn nun in der Abzweigvorrichtung zusätzlich eine Überstromabsicherung angeordnet wäre, genügt es nicht nur, das Leuchtmittel auszuwechseln, vielmehr müsste man (bei nicht reversibler Überstromabsicherung) auch die Überstromabsicherung austauschen. Zudem sind Überstromabsicherungen mit einer gewissen Trägheit behaftet, sodass es dennoch bei einem Kurzschluss zu einer Beeinträchtigung weiterer Verbraucher entlang der Durchgangsleitung kommen kann. Deshalb ist bei manchen Ausgestaltungen die Abzweigvorrichtung überstrom-unabgesichert, also nicht mit einer Überstromabsicherung ausgerüstet.

Man muss von dieser Funktion der fehlenden Überstromabsicherung des Abzweigs allerdings keinen Gebrauch machen, sondern kann alternativ auch die Abzweigvorrichtung mit einer Überstromabsicherung zusätzlich zur thermischen Absicherung durch die Trennvorrichtung ausrüsten.

Wie zuvor genannt, könnte auch nach dem Brand (genauer nach Absinken der Umgebungstemperatur auf einen beliebigen Wert unter die Trenntemperatur) von beschädigten Abzweigleitungen oder Verbrauchern eine Gefahr bei Berührung ausgehen, falls diese dann wieder mit der Durchgangsleitung elektrisch verbunden werden. Um dies zu vermeiden ist bei manchen Ausgestaltungen die Abzweigvorrichtung dazu eingerichtet, dass die Trennvorrichtung nach einem thermisch ausgelösten Trennen auch bei einer Abnahme der Umgebungstemperatur auf beliebige Werte unterhalb der Trenntemperatur die elektrische Verbindung getrennt hält. Hierdurch lässt sich die Verbindung zwischen Abzweigleitung und Durchgangsleitung irreversibel trennen, wobei die Trennvorrichtung insbesondere eine nicht-selbstrückstellende, thermisch auslösende Sicherung darstellt.

Für eine irreversible Trennvorrichtungen kann z.B. eine vorhandenes Bauelement, ein sog. "Thermal Links" der Marke "Elmwood" Verwendung verwendet werden.

Grundsätzlich gibt es verschiedene Möglichkeiten zu verhindern, dass eine einmal getrennte Verbindung selbsttätig wieder hergestellt wird.

Beispielsweise weist bei manchen Ausgestaltungen die Trennvorrichtung ein Federelement zum mechanischen Trennen der elektrischen Verbindung auf, wobei das Federelement in einem gespannten Zustand durch ein bei der Trenntemperatur schmelzendes Halteelement gehalten ist. Schmilzt das Haltelement, so wird das Federelement freigegeben und trennt die Verbindung durch seine Federkraft. Das Halteelement ist beispielsweise aus einem Wachs, einem Kunststoff oder einer Metall-Legierung hergestellt. Bei einigen dieser Ausgestaltungen ist das Federelement selbst Bestandteil der elektrischen Verbindung, also zur Stromleitung in nichtausgelöstem Zustand der Trennvorrichtung vorgesehen. Bei einigen anderen Ausgestaltungen wirkt das Federelement auf eine Schaltvorrichtung zum Trennen der Verbindung, wobei die Schaltvorrichtung die durch Einwirkung der Federkraft des Federelements betätigt wird.

Gemäß einem weiteren Beispiel weist bei manchen Ausgestaltungen die Trennvorrichtung ein Expansionselement zum mechanischen Trennen der elektrischen Verbindung auf, wobei das Expansionselement bei (und oberhalb) der Trenntemperatur einen (hinreichend) expandierten Zustand einnimmt und so die Schaltvorrichtung zum Trennen der Verbindung betätigt. Bei einigen dieser Ausgestaltungen ist das Expansionselement ein chemisches Expansionselement, d.h. die Expansion basiert auf einer irreversiblen chemischen Reaktion, die bei der Trenntemperatur ausgelöst wird. Dieses chemische Expansionselement behält also seinen expandierten Zustand beim Absinken der Umgebungstemperatur auf einen beliebigen Wert unter die Trenntemperatur. Bei manchen Ausgestaltungen ist das Expansionselement z.B. aus einem Intumeszenz-Material gefertigt.

Zusätzlich oder auch alternativ wird bei manchen Ausgestaltungen verhindert, dass die Verbindung selbsttätig wieder hergestellt wird, indem die Trennvorrichtung mit einer Arretierung ausgerüstet ist, die den (einmal) ausgelösten Zustand festhält; beispielsweise falls das Federelement aufgrund der Brandtemperaturen seine Federkraft verliert, das Federelement ein Bimetall umfasst, sodass die Federkraft beim Absinken der Umgebungstemperatur nachlässt, oder das Expansionselement beim Absinken der Umgebungstemperatur sich wieder verkleinert.

Bei manchen Ausführungsformen ist die Trennvorrichtung, manuell rücksetzbar, d.h. die elektrische Verbindung nach Auslösen der Trennvorrichtung ist wieder herstellbar. Sinnvoll ist dies zum Beispiel in Fällen, in denen zwar die Trenntemperatur bei einem Brand erreicht wurde und somit die Trennvorrichtung ausgelöst hat, jedoch lediglich brandtypische Temperaturen auftraten, die unwesentlich höher als die Trenntemperatur waren, sodass die Durchgangsleitung, die Abzweigvorrichtung, die Abzweigleitung und/oder ein Verbraucher überhaupt nicht beschädigt wurden. Um dies einfach zu bewerkstelligen, ist bei manchen Ausgestaltungen die Trennvorrichtung als eine separate, austauschbare Baugruppe realisiert. Hierzu lässt sich bei einigen Ausgestaltungen die Trennvorrichtung mit Steckkontakten oder Schraubklemmen in der Abzweigvorrichtung anschließen, z.B. unmittelbar an der Anzapfeinrichtung und/oder der Anschlusseinrichtung zum Anschließen der Abzweigleitung.

Im Unterschied zur zuvor beschriebenen irreversiblen Funktionsweise kann es gegebenenfalls auch vorteilhaft sein, wenn nach einem Brand, genauer nach Absinken der Umgebungstemperatur unter die Trenntemperatur, die Verbindung automatisch wieder hergestellt wird. Beispielsweise lässt sich so ein Gebläse im Brandfall automatisch abschalten, um den Brandherd von einer Frischluftzufuhr abzuschneiden, jedoch nach Abklingen des Brands das Gebläse automatisch wieder in Betrieb nehmen, etwa um schädliche Rauchgase abzuziehen. Hierzu stellt bei manchen Ausgestaltungen die Trennvorrichtung nach einem thermisch ausgelösten Trennen bei Abnahme der Umgebungstemperatur auf einen weiteren vorbestimmten Wert unter der Trenntemperatur die elektrische Verbindung (selbsttätig) wieder her. Dies lässt sich beispielsweise realisieren, indem bei einigen dieser Ausgestaltungen die Trennvorrichtung ein Bimetall-Federelement oder ein (reversibles) Expansionselement (zum automatischen mechanischen Unterbrechen und automatischen Wiederherstellen der elektrischen Verbindung) aufweist. Dadurch dass sich diese reversibel verhalten, lässt die entsprechende Federkraft bzw. Expansionskraft beim Abkühlen (gegebenenfalls mit einer Temperaturhysterese) wieder nach und es wird wieder der Ausgangszustand vor dem Auslösen, also die elektrische Verbindung, hergestellt.

Nachfolgend werden verschiedene Aspekte hinsichtlich unterschiedlicher Kabeltypen und der oben genannten Anzapfeinrichtung dargestellt, wobei diese insbesondere auch hinsichtlich des später erläuterten Installationssatzes relevant sind.

Bei üblichen Rundkabeln sind die Adern miteinander verdrillt. Im Brandfall kommen daher nach dem Abbrennen der Aderisolation die Aderleiter an den Kreuzungspunkten aufeinander zu liegen. Beim Flachkabel verlaufen Aderleiter hingegen ohne Kreuzungspunkte im Kabel. Daher verhält sich ein Flachkabel hinsichtlich der Kurzschlussgefahr von vornherein günstiger. Zudem hat ein Flachkabel praktisch keine inneren Spannungen, wie sie für verdrillte Rundkabel typisch sind, hat also keine ausgeprägte Tendenz wie das Rundkabel, sich beim Verbrennen der Isolation zu verwerfen. Ein Flachkabel ist daher grundsätzlich besonders für Funktionserhalt im Brandfall geeignet.

Dementsprechend ist bei manchen Ausgestaltungen die Abzweigvorrichtung zum abisolierfreien Anzapfen von Adern einer als Flachkabel ausgebildeten Durchgangsleitung eingerichtet, insbesondere wobei das Flachkabel mehrere, parallel nebeneinander in einer Ebene beabstandet verlaufende Adern aufweist. Hinsichtlich des Installationssatzes ermöglicht das abisolierfreie Anzapfen, dass die Durchgangsleitung am Ort der Anzapfung, also im Bereich der Abzweigvorrichtung, nicht aufgetrennt oder aus zwei separaten Kabeln zusammengefügt werden muss. Zudem wird die Gefahr vermieden, dass die Durchgangsleitung dort ihre Eigenschaften hinsichtlich der Funktionserhaltdauer im Brandfall (zumindest teilweise) einbüßt.

Flachkabel sind nicht nur als Datenkabel verbreitet, sondern finden auch, etwa im Rahmen der Gebäudeinstallationstechnik, für Starkstromleitungen Verwendung. Unter "Starkstrom" wird in der vorliegenden Beschreibung Strom unter einer Spannung von wenigstens 100V (z.B. unter 120 V/60 Hz in Nordamerika, und 230 V/50 Hz in den meisten übrigen Ländern; Spannungsangaben beziehen sich auf jeweils eine Phase gegen Erde) zur Energieversorgung elektrischer Verbraucher verstanden; eine Starkstromader ist von den anderen Starkstromadern eines Kabels gegen solche Spannungen isoliert und typischerweise für Ströme von wenigstens 6A ausgelegt. Es sind auch Hybrid-Flachkabel mit Starkstromadern und Datenübertragungsadern bekannt (z.B. aus der EP 0 665 608 A2). Derartige Hybrid-Flachkabel sind ebenfalls als Flachkabel anzusehen.

Zur Kontaktierung der Adern ist bei manchen Ausgestaltungen die Abzweigvorrichtung pro anzuzapfender Ader mit wenigstens einem Kontaktelement ausgerüstet, das bei der Installation der Abzweigvorrichtung in die Durchgangsleitung eindringt und die Ader kontaktiert. Hierbei lässt sich das Kontaktelement als eine mit einer Spitze versehenen Kontaktschraube, die über der jeweiligen Ader angeordnet ist und beim Hineinschrauben mit ihrer Spitze zunächst die Aderisolation durchdringt und dann mittig in den Leiter der Ader eindringt und ihn somit kontaktiert, realisieren. Zudem ist die Trennvorrichtung elektrisch mit dem Kontaktelement verbunden.

Um den Erhalt des elektrischen Kontakts zwischen Kontaktschraube und Aderleiter im Brandfall zu verbessern, insbesondere wenn beim Abbrennen der Kabelisolation dem von der Kontaktschraubenspitze nach unten gedrückten Aderleiter der sonst von der Kabelisolation vermittelte Gegenhalt fehlt, ist bei manchen Ausgestaltungen der Abzweigvorrichtung pro anzuzapfender Ader jeweils ein Paar Kontaktschrauben vorgesehen. Die beiden Kontaktschrauben eines Paares sind dabei so angeordnet, dass eine Kontaktschraube eine Seite des Aderleiters und die andere Kontaktschraube die andere des Aderleiters kontaktiert, so dass sie den Aderleiter zwischen sich einzwängen. Optional sind die Kontaktschrauben dort, wo sie den Aderleiter kontaktieren, mit einem Gewinde versehen, das sich beim Eindrehen der Kontaktschrauben seitlich in den Aderleiter einschneidet, um besseren Kontakt und Halt durch Formschluss zu bilden.

Bei manchen Ausgestaltungen sind die beiden Kontaktschrauben eines Paares auf der gleichen Höhe des durchlaufenden Aderleiters (also auf einer Geraden senkrecht zum Aderleiter) angeordnet. Bei anderen Ausgestaltungen sind sie hingegen zueinander in Kabellängsrichtung versetzt angeordnet. Bei der versetzten Anordnung drücken die beiden Kontaktschrauben den Aderleiter seitlich in entgegengesetzte Richtungen, so dass dieser leicht S-förmig um die Kontaktschrauben verläuft. Er umschlingt so die Kontaktschrauben über einen Teil ihres Umfangs, woraus eine größere Kontaktfläche resultiert. Dies erhöht die Wahrscheinlichkeit des Kontakterhalts im Brandfall, beispielsweise wenn jegliche mechanische Spannung im Aderleiter verloren geht, oder das Kabel Stöße durch herabfallende Gegenstände erleidet.

Bei manchen Ausgestaltungen dient als Fassung für die Kontaktschraube(n) (je Ader) ein Gewindeblock aus Metall, der z.B. an der Flachseite des Kabels über der jeweils zu kontaktierenden Ader angeordnet ist. Der metallische Gewindeblock dient nicht nur im mechanischen Sinn als Fassung für die Kontaktschraube(n), sondern steht auch in elektrischem Kontakt mit der bzw. den Kontaktschrauben und damit dem Aderleiter. Auch wenn im Brandfall alle Isolationen abbrennen, hält der metallische Gewindeblock die Kontaktschraube(n) in ihrer den Aderleiter kontaktierenden Lage. Hierbei ist die Trennvorrichtung elektrisch an den Gewindeblock angeschlossen oder auch der Gewindeblock einteilig an die Trennvorrichtung angeformt.

Bei manchen Ausgestaltungen umgreift die Abzweigvorrichtung die Durchgangsleitung. So lässt sich ein Abrutschen der Adern von den Kontaktelementen verhindern, insbesondere wenn im Brandfall alle Isolationen abbrennen.

Um den Funktionserhalt der Durchgangsleitung nicht zu gefährden, ist bei manchen Ausgestaltungen die Abzweigvorrichtung mit feuerbeständigen isolierenden Teilen ausgerüstet, welche im Brandfall einen elektrischen Kurzschluss zwischen verschiedenen Adern der Durchgangsleitung, den Gewindeblöcken und/oder der oder den Trennvorrichtungen vermeidet.

Insgesamt umfasst bei manchen Ausgestaltungen der Aufbau der Abzweigvorrichtung einerseits Metallteile, die ihre mechanische und elektrische Funktion auch unter Feuereinwirkung bewahren, und anderseits ein oder mehrere Abstandshalterelemente aus feuerbeständigem isolierenden Material, wie Glas oder Keramik, so dass selbst bei einem Abrennen oder Abschmelzen aller Isolationen des Flachkabels ein elektrischer Kurzschluss zwischen den verschiedenen Adern ausgeschlossen ist.

Bei manchen Ausgestaltungen besitzt die Abzweigvorrichtung, im Speziellen die Anschlusseinrichtung, Anschlussklemmen, z.B. in Form von Schraubklemmen, zum Anschließen von Adern der Abzweigleitung. Bei einigen dieser Ausgestaltungen ist wenigstens eine Anschlussklemme einteilig an der Trennvorrichtung angeformt.

Um Gefahren durch spannungsführende Teile im Abzweig zu minimieren, werden bei manchen Ausgestaltungen sowohl ein Hin- als auch ein Rückleiter der Abzweigleitung von der Durchgangsleitung getrennt. So lässt sich zudem der Gefahr des Vertauschens eines Phasen-Leiters und eines Null-Leiters bei Installationsarbeiten vorbeugen. Um der Gefahr durch jegliche Vertauschung von Leitern vorzubeugen, werden bei manchen Ausgestaltungen sämtliche Adern der Abzweigleitung von der Durchgangsleitung getrennt.

Hierzu ist die Trennvorrichtung bei manchen Ausgestaltungen zum (gleichzeitigen) Trennen von wenigsten zwei (z.B. bei einem einphasig ausgelegten Abzweig), vier (z.B. bei einem dreiphasig ausgelegten Abzweig) oder von allen Leitern (d.h. gegebenenfalls einschließlich eines Schutz- oder Erdungsleiters) der elektrischen Verbindungen ausgerüstet. Hierbei ist die Trennvorrichtung also mehrpolig aufgebaut. Bei anderen Ausgestaltungen ist die Abzweigvorrichtung mit einer oder mehreren einpoligen Trennvorrichtungen ausgerüstet, die jeweils zum Trennen eines einzelnen Leiters der elektrischen Verbindung eingerichtet ist bzw. sind.

Angesichts einer möglichen Installation in feuchter Umgebung (z.B. in Tunnels) und der Beaufschlagung mit Löschwasser sind Ausgestaltungen vorteilhaft, bei denen das Eindringen von Wasser in die Abzweigvorrichtung verhindert wird oder zumindest erschwert wird. Zu schützen sind hierbei insbesondere die Trennvorrichtung und/oder diejenigen Stellen, an denen die Kontaktschrauben die Isolation des Flachkabels durchdringen. Zu diesem Zweck ist bei manchen Ausgestaltungen eine Dichtung, z.B. aus Silikongummi, vorgesehen. Die Dichtung verhindert im installierten Zustand der Abzweigvorrichtung das Eindringen von Wasser in diese und insbesondere, dass Wasser zu denjenigen Stellen vordringen kann, an denen die Kontaktschrauben die Isolation des Flachkabels perforiert haben.

### Allgemeine Beschreibung des Installationssatzes und der elektrischen Installation sowie deren fakultative Ausgestaltungen

Weitere Aspekte der Erfindung betreffen den Installationssatz für eine elektrische Installation mit Funktionserhalt im Brandfall, sowie die entsprechend ausgeführte elektrische Installation, die jeweils wenigstens eine Abzweigvorrichtung der oben beschriebenen Art, eine Abzweigleitung und eine Durchgangsleitung mit wenigstens einem Flachkabel mit mehreren, parallel nebeneinander in einer Ebene verlaufenden Adern umfassen.

Die Durchgangsleitung stellt eine in elektrischer Hinsicht durchgehende Leitung dar, deren Länge bei manchen Ausgestaltungen im Wesentlichen (eventuell bis auf die Längen von in Endbereichen angeordneten Abzweigleitungen) der Gesamtlänge der elektrischen Installation entspricht.

Bei manchen Ausgestaltungen erstrecken sich (zumindest im Bereich der elektrischen Installation) die Adern der Durchgangsleitung einteilig im Wesentlichen über die gesamte Länge der Durchgangsleitung; die Durchgangsleitung umfasst hierbei also wenigstens ein durchgehendes (einteiliges) Flachkabel von der Länge der Durchgangsleitung. Bei anderen Ausgestaltungen wird jedoch in Kauf genommen, dass die Durchgangsleitung entlang ihrer Leitungsrichtung aus mehreren Abschnitten (Flachkabeln) zusammengesetzt ist, etwa um vorkonfektionierte Flachkabelzuschnitte beim Errichten der elektrischen Installation entlang der Durchgangsleitung zu verwenden. In diesem Fall sind die einzelnen Flachkabelzuschnitte entlang der Durchgangsleitung mit geeigneten Verbindern elektrisch verbunden.

Bei manchen Ausgestaltungen werden nur (einfache) Verbraucher (wie dauerhaft betriebene Leuchten oder Gebläse), die lediglich konstant mit elektrischer Leistung versorgt werden, an der Durchgangsleitung angeschlossen. Zusätzlich oder alternativ werden bei einigen Ausgestaltungen auch elektrische Vorrichtungen angeschlossen, die eine Signal- oder Datenübertragung benötigen, wie beispielsweise Sensoren oder fernschaltbare Signalleuchten.

Deshalb ist bei manchen Ausgestaltungen die Durchgangsleitung zur elektrischen Leistungsversorgung der Verbraucher mit Starkstromadern und/oder mit Adern zur Signal- oder Datenübertragung ausgerüstet. Dementsprechend ist die Abzweigvorrichtung bei manchen Ausgestaltungen zum Anzapfen von Starkstromadern und/oder zum Anzapfen von Adern zur Signal- oder Datenübertragung ausgerüstet.

Grundsätzlich ist es mit dem beschriebenen Aufbau der Anschlussvorrichtung - zumindest bei manchen der beschriebenen Ausgestaltungen - möglich, Funktionserhalt unter Verwendung eines herkömmlichen, nicht besonders für Funktionserhalt ausgerüsteten Flachkabels zu erzielen. Dies ist den zuvor genannten besonders günstigen Eigenschaften von Flachkabeln hinsichtlich der nicht überkreuzenden Leiter und der Abwesenheit innerer Spannungen geschuldet.

Vorteilhafterweise verwenden der Installationssatz und die ausgeführte elektrische Installation jedoch ein Flachkabel, das besonders für Funktionserhalt ausgerüstet ist. Hierbei handelt es sich um ein Flachkabel mit mehreren parallel nebeneinander in einer Ebene verlaufenden Adern (Starkstromadern, Adern zur Signal- oder Datenleitung oder beides), zwischen denen feuerbeständiges Isoliermaterial angeordnet ist. Eine Isolierhülle umgibt die Adern und das feuerbeständige Isoliermaterial. Dieses Isoliermaterial verhindert, dass sich die Leiter der Adern beispielsweise bei mechanischer Stoßbeaufschlagung berühren können. Die Adern und das feuerbeständige Isoliermaterial sind von einer Isolierhülle aus Kunststoff umgeben, welche im Nicht-Brandfall eine Lage definierende Einbettung für die Adern und das feuerbeständige Isoliermaterial bildet. Die Isolierhülle ist wiederum bei manchen Ausgestaltungen von einem Kabelmantel aus Kunststoff umgeben, welcher die Außenkontur des Flachkabels definiert, dem Kabel ggf. Beständigkeit gegen aggressive Substanzen verleiht und farbig markiert und beschriftet sein kann. Bei manchen Ausführungen übernimmt die Isolierhülle auch die Funktion des äußeren Kabelmantels.

Zur Schaffung eines Funktionserhaltkabels würde der Fachmann beim Rundkabel konventionellerweise daran denken, die herkömmlichen Aderisolierungen, mit denen z.B. die Adern eines herkömmlichen Rundkabels aufeinander liegen, aus feuerbeständigem Isoliermaterial zu fertigen. Bei dem Flachkabel erstreckt sich das feuerbeständige Isoliermaterial jedoch vorzugsweise stegartig zwischen den Adern von einer Ader zur nächsten. Die Stege erstrecken sich z.B. parallel zur Kabelebene und liegen z.B. in der Mittelebene des Flachkabels, in der auch die Adern verlaufen. Das feuerbeständige Isoliermaterial bildet somit einen Abstandshalter für die Adern in Form eines Stegs, der auch dann erhalten bleibt, wenn sämtliche nichtfeuerbeständige Isolationen abgebrannt sind. Das feuerbeständige Isoliermaterial umgibt die Adern somit nicht gleichmäßig in alle Richtungen, sondern erstreckt sich hauptsächlich nur in diejenige Richtung, in der sich eine benachbarte Ader befindet. Dies ist diejenige Richtung, in der bei Verschiebung der Ader hauptsächlich Kurzschlussgefahr droht.

Mit der Abzweigvorrichtung wird, wie zuvor genannt, die Durchgangsleitung vor einem Kurzschluss im Abzweig geschützt, der durch brandtypische Temperaturen hervorgerufen ist.

Deshalb ist die Installation vorteilhafterweise so angeordnet, dass die Abzweigvorrichtung im Brandfall im Wesentlichen derselben Umgebungstemperatur wie der Abzweig ausgesetzt ist. Da Brände oft räumlich begrenzt auftreten und da eine Temperaturverteilung im Brandfall auf relativ kurzen Entfernungen in horizontalen Richtungen aber besonders auch in vertikaler Richtung starke Schwankungen aufweisen kann, ist bei manchen Ausgestaltungen die Abzweigleitung von verhältnismäßig kurzer Länge dimensioniert, und zwar beispielsweise höchstens etwa 0,5 m, 1 m, 2 m, 4 m, 7 m oder 10 m.

Gemäß einem weiteren Gesichtspunkt dieser Schutzfunktion der Abzweigvorrichtung lassen sich einerseits für die Durchgangsleitung und andererseits für den Abzweig unterschiedliche Güten hinsichtlich des Funktionserhalts im Brandfall verwenden. Bei der Installation ist bei manchen Ausgestaltungen der Funktionserhalt der Durchgangsleitung wesentlich höher als derjenige der einzelnen Abzweige, da z.B. die Durchgangsleitung insgesamt funktionsfähig bleiben muss, um auch Abzweige außerhalb des Brandbereichs im Brandfall sicher zu versorgen. Hingegen kann der Verlust eines oder mehrerer unmittelbar dem Brand ausgesetzter Abzweige in Kauf genommen werden. Deshalb weist die Durchgangsleitung bei manchen Ausgestaltungen ein Brandsicherheitskabel für eine bestimmte Funktionserhaltdauer im Brandfall auf, während der Abzweig, zumindest die wenigstens eine Abzweigleitung und/oder wenigstens ein daran angeschlossener elektrischer Verbraucher, eine im Wesentlichen geringere Funktionserhaltdauer als die des Brandsicherheitskabels aufweist bzw. aufweisen.

Besonders in größeren Gebäuden, Verkehrsbauwerken (wie z.B. Tunnels) und Schiffen kann die Evakuierungszeit 30 min und mehr betragen. Diese sind daher in der Regel mit elektrischen Noteinrichtungen ausgerüstet, die im Brandfall zumindest für die Evakuierungszeit mit elektrischer Energie versorgt werden müssen, um eine Evakuierung zu ermöglichen. Hierzu gehören z.B. Notbeleuchtungen, Hinweisschilder, Rauchabzugsgebläse usw. Dementsprechend führt bei manchen elektrischen Installationen die Durchgangsleitung entlang eines langestreckten Hohlraums, wie einen Tunnel oder einen Gebäudegang. Bei einigen dieser Ausgestaltungen versorgen die Abzweigleitungen entlang in dem Hohlraum verteilt angeordnete Verbraucher.

Bei manchen Ausgestaltungen sind an der Durchgangsleitung viele, insbesondere bis zu 10, 50, 100, 200 oder auch mehr, jeweils zueinander beabstandete Abzweigvorrichtungen angeordnet. Im Übrigen besitzt die Durchgangsleitung bei manchen Ausgestaltungen eine Länge von bis zu 10 m, 50 m, 100 m, 500 m, 1 km, 5 km oder mehr. Hierbei stellt die Durchgangsleitung eine zentrale elektrische Versorgung dar, von der die Abzweigleitungen über die Abzweigvorrichtungen gespeist werden.

Für Betrieb und Wartung der Installation ist es gegebenenfalls vorteilhaft, die Durchgangsleitung aus mehreren Abschnitten zusammenzusetzen. Deshalb besitzt bei einigen Ausgestaltungen die Durchgangsleitung mehrere Abschnitte, wobei an diesen Abschnitten mehreren Abzweigvorrichtungen angeschlossen sind. Hierbei ist an diesen Abzweigvorrichtungen jeweils wenigstens eine Abzweigleitung angeschlossen, wobei an der Abzweigleitung zumindest ein Verbraucher angeschlossen ist. Diese Abschnitte sind jeweils separat überstromabgesichert, sodass die Verbraucher eines Abschnitts gemeinsam überstromabgesichert sind. Im Übrigen sind hierbei die Abzweigleitungen jeweils einzeln durch die Abzweigvorrichtung mit der thermisch auslösenden Trennvorrichtung thermoabgesichert.

### Erläuterung der Zeichnung

Die angefügte Zeichnung veranschaulicht Ausführungsformen der verschiedenen Aspekte der Erfindung. In der Zeichnung zeigen jeweils als schematische Darstellung:
Fig. 1 eine elektrische Installation in einem Tunnel mit einer Durchgangsleitung und mit daran über Abzweigvorrichtungen angeschlossene Abzweigleitungen zur Versorgung von Leuchten mit elektrischer Energie,
Fig. 2 die Abzweigvorrichtung mit einer ersten Ausführungsform einer Trennvorrichtung,
Fig. 3 die Abzweigvorrichtung mit einer weiteren Ausführungsform der Trennvorrichtung und
Fig. 4 die Abzweigvorrichtung mit einer weiteren Ausführungsform der Trennvorrichtung.

### Beschreibung von Ausführungsformen anhand der Zeichnung

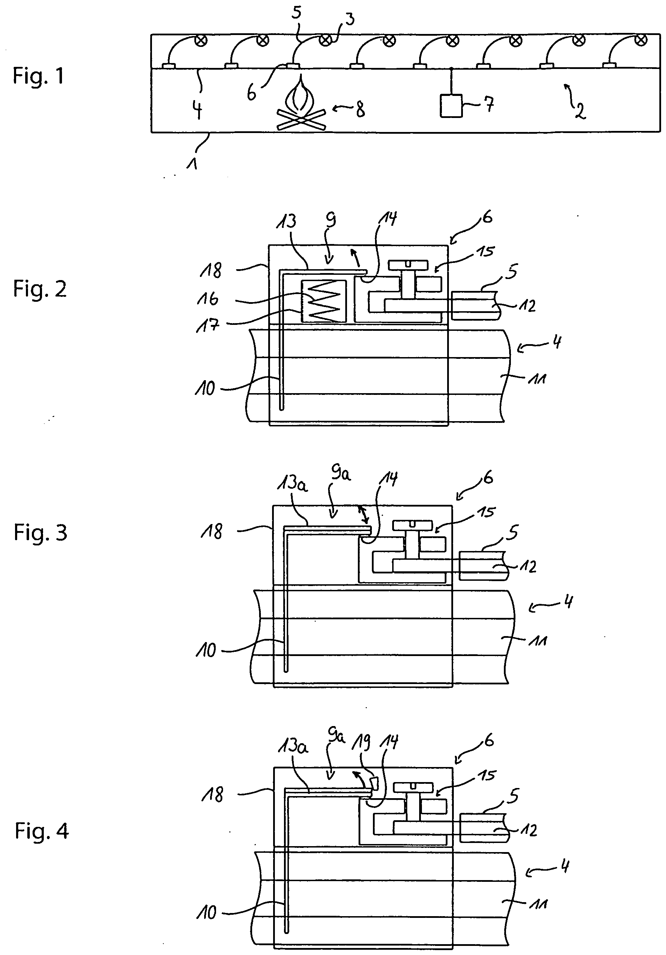

In einem Tunnel 1, von dem in Figur 1 beispielhaft ein Abschnitt dargestellt ist, ist die elektrische Installation 2 zur Beleuchtung des Tunnels 1 installiert. Hierzu umfasst die Installation 2 Leuchten 3, die an einer Decke des Tunnels 1 befestigt sind. Der Tunnel besitzt eine Gesamtlänge von etwa 5 km, wobei jeweils im Abstand von 20 m jeweils eine Leuchte 3 angebracht ist, sodass die Installation insgesamt 250 Leuchten 3 umfasst. Es sei angemerkt, dass diese sowie die übrigen Figuren bloße symbolhafte Darstellungen und nicht maßstabsgerecht sind.

Zur Versorgung der Leuchten 3 mit elektrischer Leistung dient bei der Installation 2 die Durchgangsleitung 4, welche sich im Wesentlichen über die Gesamtlänge des Tunnels 1 erstreckt. An dieser Durchgangsleitung 4 ist jede Leuchte 3 über eine separate Abzweigleitung 5 angeschlossen, und zwar jeweils über eine separate Abzweigvorrichtung 6 mit der die Durchgangsleitung abisolierfrei angezapft ist. Daher entspricht bei diesem Ausführungsbeispiel die Anzahl der Leuchten 3 auch der Anzahl der Abzweigleitungen 5 sowie der Abzweigvorrichtungen 6. Alternativ sind z.B. jeweils zwei Leuchten über jeweils eine eigene (also zwei separate) Abzweigleitungen gemeinsam an einer Abzweigvorrichtung angeschlossen.

Insgesamt ist die elektrische Installation mit einem Installationssatz errichtet, der die Durchgangsleitung 4, die Abzweigvorrichtungen 6, die Abzweigleitungen 5 sowie die Leuchten 3 nebst passendem Montagematerial umfasst. Bei alternativen Ausführungsbeispielen umfasst der Installationssatz lediglich die Durchgangsleitung 4, die Abzweigvorrichtungen 6 und die Abzweigleitungen 5.

Zur Energieversorgung ist die Durchgangsleitung 4 durch eine einzige Stromquelle 7 gespeist, welche z.B. zwischen zwei Abzweigvorrichtungen 6 angeschlossen ist. Stattdessen lässt sich die Stromquelle 7 auch an einem Ende der Durchgangsleitung 4 anschließen. Außerdem kann alternativ mit mehreren Stromquellen 7, die entlang der Durchgangsleitung 4 angeschlossen sind, z.B. ein Spannungsabfall entlang der Durchgangsleitung 4 kompensiert werden. Um sicherzustellen, dass die Durchgangsleitung 4 im Brandfall möglichst zuverlässig mit Strom versorgt wird, ist die Stromquelle 7 nicht über eine Abzweigleitung 5 und Abzweigvorrichtung 6 der nachfolgend beschriebenen Art angeschlossen sondern über ein Brandsicherheitskabel.

Insgesamt ist die Installation 2 durch mehrere Maßnahmen für Funktionserhalt im Brandfall eingerichtet, wie nachfolgend erläutert wird.

Gemäß einer ersten Maßnahme ist die Durchgangsleitung 4 aus einem Brandsicherheitskabel für Funktionserhalt im Brandfall aufgebaut, das ein Flachkabel mit Starkstromadern ist und das mindestens 90 Minuten Funktionserhaltdauer im Brandfall gewährleistet. Der Funktionserhalt im Brandfall wird hierbei einerseits durch die Anordnung der parallel nebeneinander in einer Ebene verlaufenden Adern des Flachkabels erreicht, sodass auch bei Abschmelzen oder Abbrennen der Isolierung die Adern nicht durch eine Kraft (wie etwa bei verdrillten Adern) aufeinander zu bewegt und somit kurzgeschlossen werden. Andererseits ist das Flachkabel mit einer besonderen feuerbeständigen Isolierung ausgerüstet, welche die Adern auch unter Brandeinfluss auf Distanz halten. Somit kann die Durchgangsleitung 4 über längere Zeit dem Brand ausgesetzt sein und trotzdem die elektrische Stromleitung (kurzschlussfrei) aufrechterhalten. Zudem ist dadurch sichergestellt, dass die Durchgangsleitung 4 im Brandfall elektrische Leistung auch über den Brandbereich 8 hinaus transportiert und insbesondere, dass die Durchgangsleitung 4 nicht aufgrund eines Kurzschlusses insgesamt zum Stromleiten unbrauchbar wird.

Im Brandfall erstreckt sich der Brandbereich 8 meist nur über eine gewisse Teillänge des Tunnels 1. In Figur 1 ist exemplarisch ein entlang des Tunnels 1 begrenzter Brandbereich 8 gezeigt, bei dem lediglich eine der Leuchten 3 (von schädlicher Feuer- und Hitzeweinwirkung) betroffen ist. Hierbei ist der Brandbereich 8 ein Bereich des Tunnels 1, in dem beim Brandfall Temperaturen von mindestens 150° C herrschen. Diese bestimmte, brandtypische Temperatur wurde hier gewählt, da ab der etwas höheren Temperatur von 180° C eine bauartbedingte Beschädigung der in diesem Ausführungsbeispiel gewählten Lampen 3 sowie der Abzweigleitungen 5 eintritt, die zu einem Kurzschluss führen kann. Bei anders ausgeführten Leuchten und/oder Abzweigleitungen mit davon verschiedener Temperaturbeständigkeit lässt sich der Brandbereich 8 durch andere Temperaturen definieren. Im Übrigen darf diese Temperatur nicht mit den Prüftemperaturen verwechselt werden, welche z.B. durch einschlägige Normen zur Bestimmung der Funktionserhaltdauer festlegt sind.

Auch wenn die Durchgangsleitung 4 als Brandsicherheitskabel ausgeführt ist, besteht jedoch prinzipiell die Gefahr, dass, wie zuvor genannt, die im Brandbereich 8 liegende Leuchte 3 oder deren Abzweigleitung 5 einen Kurzschluss (etwa aufgrund abschmelzender oder abbrennender Isolierungen) erfahren. Dieser Kurzschluss könnte die Durchgangsleitung 4 über die Abzweigvorrichtung 6 kurzschließen und so zu einem Totalausfall der elektrischen Installation 2, also der gesamten Beleuchtung des Tunnels 1, führen.

Hiergegen ist als eine weitere Maßnahme die Abzweigvorrichtung 6 mit der thermisch auslösenden Trennvorrichtung 9 ausgerüstet, die in Figur 2 näher erläutert wird. Die Trennvorrichtung 9 ist hierbei zum selbsttätigen Trennen der elektrischen Verbindung zwischen der Abzweigleitung 5 und der Durchgangsleitung 4 bei Anstieg der Umgebungstemperatur der Abzweigvorrichtung 6 bei dem vorbestimmten brandtypischen Wert von 150° C (Trenntemperatur) eingerichtet. Dadurch werden die Leuchte 3 und die Abzweigleitung 5 im Brandbereich 8 von der Durchgangsleitung 4 im Wesentlichen bei der Trenntemperatur von 150° C elektrisch getrennt, und zwar bevor es zu einem brandbedingten Kurzschluss in der Leuchte 3 und der Abzweigleitung 5 ab etwa 180° C kommen kann.

Hierfür ist die Abzweigleitung 5 möglichst kurz gewählt, nämlich in diesem Ausführungsbeispiel etwa 4 m, da die Abzweigvorrichtung 6 (die thermisch auslösenden Trennvorrichtung 9) im Wesentlichen derselben Temperatur wie die Abzweigleitung 5 und die Lampe 3 ausgesetzt sein sollte. So lässt sich sicherstellen, dass die Trennvorrichtung 9 nicht unnötig auslöst, weil die Abzweigvorrichtung 6 höheren Temperaturen ausgesetzt ist als die Abzweigleitung 5 oder die Leuchte 3, und auch nicht verspätet oder überhaupt nicht auslöst, da nur die Abzweigleitung 5 oder die Leuchte 3 hohen, schädlichen Temperaturen ausgesetzt sind während die Abzweigvorrichtung 6 an einem zu weit entfernten kühleren Ort positioniert ist. Vorzugsweise ist daher (in Abhängigkeit von der baulichen Gestalt des Tunnels 1) die Abzweigvorrichtung 6 derart in Bezug zu den Leuchten 3 und dem Verlauf der Abzweigleitung 5 räumlich angeordnet, dass im Brandfall mit annähernd gleichen Temperaturen jeweils am Ort dieser Installationsteile (Abzweigvorrichtung 6, Abzweigleitung 5 und Leuchte 3) zu rechnen ist.

Das in der Figur 2 schematisch dargestellte Ausführungsbeispiel der Abzweigvorrichtung 6 zeigt diese im normalen (nicht-ausgelösten) Betriebszustand auf der Durchgangsleitung 4 montiert. Im normalen Betriebszustand ist also die elektrische Verbindung zwischen Durchgangsleitung 4 und Abzweigleitung 5, also auch der Leuchte 3, hergestellt. Bei diesem Ausführungsbeispiel sind die Durchgangsleitung 4 und auch die Abzweigleitung 5 einphasig ausgeführt, also mit drei Aderleitern ausgerüstet, nämlich einem Phasen-Leiter, einem Null-Leiter und einem Schutzleiter.

Hierbei ist die Abzweigvorrichtung 6 mit jeweils einer (separaten) Trennvorrichtung für Hin- und Rückleiter ausgerüstet, nämlich für den Phasen-Leiter und den Null-Leiter. In der Figur 2 ist allerdings exemplarisch nur die Abzweigung für den Phasen-Leiter 11 gezeigt, wobei die Abzweigung für den Null-Leiter analog hierzu aufgebaut ist, jedoch um den Leiterabstand des Flachkabels (quer zur Längsrichtung der Durchgangsleitung 4) beabstandet angeordnet ist (und zwar entlang der Längsrichtung der Durchgangsleitung 4 nebeneinander oder alternativ auch versetzt zueinander). Im Übrigen sind zwischen den im Folgenden beschriebenen, elektrisch leitenden Teilen der Abzweigvorrichtung 6 für Null- und Phasen-Leiter 11 geeignete feuerbeständige isolierende Elemente angeordnet, welche einen Kurzschluss auch bei Abbrennen der Isolierung der Durchgangsleitung 4 im Bereich der Abzweigvorrichtung 6 (insbesondere bis zur Trennvorrichtung 9 hin) verhindern.

Alternativ ist die Durchgangsleitung z.B. dreiphasig ausgeführt. Dann lassen sich sowohl einphasige als auch zwei- oder dreiphasige Abzweigleitungen an die Durchgangsleitung anschließen. Hierzu sind beispielsweise Abzweigvorrichtungen vorgesehen, die die gleichzeitige Anzapfung aller Hin- und Rückleiter, also aller drei Phasen-Leiter und des Null-Leiters, ermöglichen. Außerdem sind weitere Abzweigvorrichtungen vorgesehen, die zur Anzapfung jeweils eines einzigen bestimmten Phasen-Leiters ausgerüstet sind, sodass zur Anzapfung jeweils einzelner verschiedener Phasen verschiedene, für die jeweilige Phase eingerichtete Abzweigvorrichtungen an der Durchgangsleitung montiert werden.

Insgesamt wird, wie nachfolgend im Detail beschrieben, die elektrischen Verbindung zwischen der Durchgangsleitung 4 und der Abzweigleitung 5 (genauer zwischen jeweils einem Aderleiter 11 der Durchgangsleitung 4 und einem entsprechenden Aderleiter 12 der Abzweigleitung 5) über eine Anzapfeinrichtung zum Anzapfen der Durchgangsleitung 4, die Trennvorrichtung 9 und schließlich eine Anschlusseinrichtung zum Anschließen der Abzweigleitung 5 hergestellt.

Bei der gezeigten Abzweigvorrichtung 6 ist als Anzapfeinrichtung im Wesentlichen ein Kontaktmesser 10 zum Eindringen in die Durchgangsleitung 4 vorgesehen. Dort kontaktiert das Kontaktmesser 10 den Aderleiter 11 (Phase) einer Starkstromader der Durchgangsleitung 4, und zwar ohne dass hierzu das Flachkabel abisoliert ist. Damit das Kontaktmesser 10 nicht unbeabsichtigt herausgezogen wird und/oder die Abzweigvorrichtung sich nicht unbeabsichtigt von der Durchgangsleitung 4 löst, umgreift ein Gehäuse 18 der Abzweigvorrichtung 6 das Flachkabel der Durchgangsleitung 4. Hierbei dient das Gehäuse 18 zudem als Gegenlager beim Einstechen des Kontaktmessers 10 in die Durchgansleitung 4. Die Durchgangsleitung 4 ist also durch die Abzweigvorrichtung 6 hindurch geführt.

Das in den Figuren 2 bis 4 dargestellte Kontaktmesser 10 ist dornförmig gestaltet und zum zentralen Einstechen in den Aderleiter 11 innerhalb der Abzweigvorrichtung 6 positioniert. Bei anderen Ausführungsbeispielen besitzt das Kontaktmesser eine Gabelform mit zwei Zinken, zwischen denen sich der Aderleiter 11 einzwängen und so auch bei Abbrennen der Isolation des Flachkabels sicher kontaktieren lässt. Fakultativ sind die Zinken mit Rastnasen oder Widerhaken ausgerüstet um den Aderleiter 11 sicher zwischen den Zinken zu halten. Bei anderen Ausführungsbeispielen ist eine Kontaktschraube (mit Gewinde) zum Eindrehen zentral in den Aderleiter 11 vorgesehen. Bei noch anderen Ausführungsbeispielen sind zwei, quer zu Längsrichtung der Durchgangsleitung 4 beabstandete Kontaktschrauben vorgesehen, zwischen denen sich der Aderleiter 11 ebenfalls einzwängen lässt. Bei einigen dieser Ausführungsbeispiele sind die Kontaktschrauben zusätzlich in Längsrichtung versetzt angeordnet, sodass der Aderleiter 11 beim Eindrehen der beiden Kontaktschrauben S-förmig verformt wird, sodass eine größere Kontaktfläche zwischen den Kontaktschrauben und dem Aderleiter 11 gebildet wird.

Gemäß der Figur 2 ist das Kontaktmesser 10 einteilig mit einem Kontaktarm 13 der Trennvorrichtung 9 hergestellt. Alternativ ist die Anzapfeinrichtung ein Einzelbauteil oder auch aus mehreren Bauteilen zusammengesetzt und letztlich mit der Trennvorrichtung 9 elektrisch verbunden in der Abzweigvorrichtung 6 montiert.

Die Trennvorrichtung 9 umfasst im Wesentlichen den Kontaktarm 13 sowie eine Druckfeder 16, die einem Kunststoffzylinder 17 eingegossen und dabei in gespanntem Zustand gehalten ist.

Der Kontaktarm 13 ist biegeelastisch ausgeführt und liegt im normalen Betriebszustand auf einem Kontaktpunkt 14 der Trennvorrichtung 9 auf. In diesem Zustand ist die Trennvorrichtung also nicht ausgelöst und die elektrische Verbindung ist hergestellt.

Die elektrische Verbindung lässt sich daher durch Biegen des Kontaktarms 13 trennen, wobei dieser, wie durch den Pfeil in der Figur 2 dargestellt, von dem Kontaktpunkt 14 wegschwenkt. Alternativ ist der Kontaktarm nicht biegeelastisch ausgeführt und stattdessen insgesamt schwenkbar angelenkt.

Zum Biegen des Kontaktarms 13 ist die Druckfeder 16 vorgesehen. Wird (im Brandfall) der Kunststoffzylinder 17 erhitzt, so schmilzt dieser bei Erreichen seiner Schmelztemperatur, welche so gewählt ist, dass sie der gewünschten Trenntemperatur von 150° C entspricht. Beim Schmelzen gibt der Kunststoffzylinder 17 die Druckfeder 16 frei. Dadurch kann diese ihre Federkraft frei ausüben, wobei sie zwischen dem Gehäuse 18 und dem Kontaktarm 13 angeordnet ist. Hierbei ist die Federkraft ausreichend dimensioniert, um den Kontaktarm 13 zumindest soweit zu biegen (in der Figur 2 entlang des Pfeils nach oben), dass dieser vom Kontaktpunkt 14 wegschwenkt und die elektrische Verbindung unterbrochen wird. Folglich bei Erreichen der Trenntemperatur von 150° C die elektrische Verbindung durch diesen Mechanismus selbsttätig getrennt.

Im Übrigen ist die derart konstruierte Trennvorrichtung 9 eine nicht-selbstrückstellende (irreversible), thermisch auslösende Sicherung, da auch bei Absinken der Umgebungstemperatur unter die Trenntemperatur lediglich der zuvor geschmolzene Kunststoff des Kunststoffzylinders 17 wieder erstarrt, jedoch nicht die Federkraft und die Durchbiegung des Kontaktarms 13 nachlässt, sodass die elektrische Verbindung dauerhaft getrennt bleibt. Ferner sei angemerkt, dass sich die einmal ausgelöste Trennvorrichtung 9 manuell wieder zurücksetzen lässt, indem die expandierte Druckfeder 16 entnommen und ein neuer Kunststoffzylinder 17 mitsamt eingeschlossener vorgespannter Druckfeder 16 eingesetzt wird. Im Übrigen kann der Kunststoffzylinder 17 massiv sein oder auch nur als zylindrisches Gefäß für die Druckfeder 16 geformt sein. Alternativ sind weitere, nicht-zylindrische Formen, etwa eine Quaderform, geeignet, die Druckfeder 16 aufzunehmen. Bei weiteren Ausführungsbeispielen ist der Kunststoffzylinder 17 mit eingeschlossener Druckfeder 16 nicht als einzelnes loses Bauelement in die Abzweigvorrichtung 6 eingesetzt, sondern die Druckfeder 16 direkt in der Abzweigvorrichtung 6 eingegossen. Bei weiteren Ausführungsbeispielen ist eine Zugfeder statt einer Druckfeder vorgesehen. Bei weiteren Ausführungsbeispielen ist die Zug- oder Druckfeder nicht innerhalb des Kunststoffkörpers in gespanntem Zustand angeordnet, sondern an einem ihrer Enden durch einen entsprechend geformten Kunststoffkörper in gespannten Zustand gehalten, beispielsweise indem der Kunststoffkörper mit einem Haken oder einer Nut zum Halten ausgebildet ist oder indem der Kunststoffkörper als Anschlag für die gespannte Feder angeordnet ist. Im Übrigen wird statt eines Kunststoffkörpers bei weiteren Ausführungsbeispielen ein Körper aus anderen, bei der Trenntemperatur schmelzenden Materialien, etwa Wachs oder eine Legierung, verwendet.

Die Anschlusseinrichtung zum Anschließen der Abzweigleitung 5 besitzt im Wesentlichen eine Schraubklemme 15, in der sich der Aderleiter 12 der Abzweigleitung 5 einführen und mit einer Schraube fixieren lässt.

Gemäß Figur 2 ist der Kontaktpunkt 14 der Trennvorrichtung einteilig mit der Schraubklemme 15 der Anschlusseinrichtung ausgeführt. Bei alternativen Ausgestaltungen ist die Trennvorrichtung 9 baulich getrennt von der Anschlusseinrichtung realisiert, allerdings im Montierten Zustand der Abzweigvorrichtung 6 elektrisch leitend mit dieser verbunden.

Die nachfolgend beschriebenen Ausführungsbeispiele unterscheiden sich nur hinsichtlich der Trennvorrichtung 9.

Die Figur 3 zeigt eine alternative Trennvorrichtung 9a, bei der der Kontaktarm 13a ein Bimetall ist, welches sich ab der Trenntemperatur von 150° C von dem Kontaktpunkt 14 (entsprechend dem Pfeil in Figur 3 nach oben hin) weg biegt. Anstatt durch die Federkraft einer zusätzlichen Feder (wie zuvor beschrieben), wird hier der Kontaktarm 13a durch seine eigene selbsttätige und temperaturabhängige Biegebewegung von dem Kontaktpunkt weg geschwenkt. Allerdings ist diese Bewegung aufgrund des Bimetalls (abgesehen von einer unwesentlichen Hysterese) reversibel und der Kontaktarm 13a bewegt sich bei Absinken der Umgebungstemperatur wieder auf den Kontaktpunkt 14 zu. Der Mechanismus dieses Ausführungsbeispiels stellt also die elektrische Verbindung nach einem vorhergehenden Trennen (Auslösen) bei anschließendem Abkühlen unter die Trenntemperatur wieder selbsttätig her. Somit stellt dieses Ausführungsbeispiel eine selbst-rückstellende thermisch auslösende Sicherung dar.

Diese selbst-rückstellende Eigenschaft kann, wie oben beschrieben, vorteilhaft sein. Sie lässt sich, wie in dem weiteren Ausführungsbeispiel nach Figur 4 gezeigt, jedoch beispielsweise dadurch verhindern, dass der Kontaktarm 13a im ausgelösten Zustand durch eine Rastnase 19 arretiert wird. Dadurch kann er trotz Abkühlung der Umgebungstemperatur auf beliebige Werte unter der Trenntemperatur nicht in seine Ausgangslage zurückkehren und keinen Kontakt zum Kontaktpunkt 14 herstellen. Somit zeigt dieses Ausfiihrungsbeispiel eine nicht-selbstrückstellende thermisch auslösende Sicherung auf Basis des Bimetall-Federelements 13a.

Im Übrigen ist bei den zuvor beschriebenen Ausführungsbeispielen die Abzweigvorrichtung 6 nicht mit einer (herkömmlichen) Überstromabsicherung ausgerüstet, sodass die Trennung der elektrischen Verbindung bloß umgebungstemperatur-abhängig und unabhängig von dem Strom durch die Abzweigleitung 5 erfolgt.

Allerdings kann ein Kurzschluss auch bei nicht-brandtypischen Temperaturen auftreten, etwa kurzzeitig beim Ende der Lebensdauer der Leuchten 3, sodass bei manchen Ausführungsbeispielen die Leuchten jeweils mit einer Überstromsicherung (zusätzlich zur thermisch auslösenden Absicherung durch die Abzweigvorrichtung 6) zum Schutz der Durchgangsleitung 4 ausgerüstet sind.

Ferner lässt sich auch die Durchgangsleitung 4 gegen Überstrom absichern. Bei einem alternativen Ausführungsbeispiel ist die Durchgangsleitung 4 in mehrere Abschnitte unterteilt, wobei jeder Abschnitt über eine separate Überstromabsicherung abgesichert ist. Deshalb sind jeweils diejenigen Leuchten 3, die an einem gemeinsamen Abschnitt angeschlossen sind auch gemeinsam überstromabgesichert. Tritt hierbei ein Kurzschluss in einer Leuchte 3 auf, so spricht nur die Überstromabsicherung des zugehörigen Abschnitts an und unterbricht die Stromführung dieses Abschnitts. Daher sind nur die an diesem Abschnitt angeschlossenen Leuchten 3 betroffen, während alle übrigen Leuchten 3 der Installation 2 unbeeinträchtigt bleiben. Bei einem weiteren Ausführungsbeispiel verlaufen zwei solcher elektrischer Abschnitte räumlich parallel zueinander, wobei die Leuchten 3 entlang des Tunnels 1 jeweils abwechselnd an jeweils dem einen und dem anderen (elektrischen) Abschnitt der Durchgangsleitung angeschlossen sind. Fällt dann ein Abschnitt (wegen Auslösen seiner Überstromabsicherung) aus, so fällt nur jede zweite Leuchte 3 entlang des Tunnels 1 aus, sodass weiterhin für eine gewisse Grundbeleuchtung in dem betroffen Tunnelbereich gesorgt ist.

## Patentansprüche

1. Elektrische Installation (2) mit Funktionserhalt im Brandfall, umfassend wenigstens eine Durchgangsleitung (4), die entlang eines langgestreckten Hohlraums (1), wie einen Tunnel oder einen Gebäudegang, führbar ist und die für den Funktionserhalt im Brandfall ein Flachkabel mit mehreren, parallel nebeneinander in einer Ebene verlaufenden Adern aufweist, wobei das Flachkabel mit einer feuerbeständigen Isolierung ausgerüstet ist, welche die Adern auch unter Brandeinfluss auf Distanz hält,
Abzweigleitungen (5), die entlang in dem Hohlraum (1) verteilt angeordnete sicherheitsrelevante Verbraucher (3), wie Leuchten oder Gebläse, versorgen, wobei mehrere Abzweigvorrichtungen (6), die Vorrichtungen zum abisolierfreien Anzapfen der Adern des Flachkabels sind, an der Durchgangsleitung (4) angeschlossen sind, wobei an diesen Abzweigvorrichtungen (6) jeweils wenigstens eine Abzweigleitung (5) angeschlossen ist und wobei an der Abzweigleitung (5) zumindest ein Verbraucher (3) angeschlossen ist,
wobei die sicherheitsrelevanten Verbraucher (3) eine geringere Funktionserhaltdauer als die Durchgangsleitung (4) aufweisen,
wobei die Abzweigvorrichtungen (6) zum Funktionserhalt der Durchgangsleitung (4) im Brandfall mit einer thermisch auslösenden Trennvorrichtung (9) ausgerüstet sind, die eingerichtet ist, die elektrische Verbindung zwischen der Abzweigleitung (5) und der Durchgangsleitung (4) bei Anstieg der Umgebungstemperatur bei einem vorbestimmten brandtypischen Wert, einer sogenannten Trenntemperatur, selbsttätig zu trennen, um die Durchgangsleitung (4) gegen einen Kurzschluss in einer Abzweigleitung (5) im Brandfall zu schützen, indem eine Abzweigleitung (5) automatisch von der Durchgangsleitung (4) getrennt wird,
wobei
die Abzweigleitungen (5) eine geringere Funktionserhaltdauer als die Durchgangsleitung (4) aufweisen, **dadurch gekennzeichnet, dass**
die Trennvorrichtung (9) eingerichtet ist, nach einem thermisch ausgelösten Trennen bei Abnahme der Umgebungstemperatur auf einen Wert unter der Trenntemperatur die elektrische Verbindung wieder herzustellen.

2. Elektrische Installation (2) nach Anspruch 1, wobei die Abzweigvorrichtung (6) die Durchgangsleitung (4) umgreift und pro anzuzapfender Ader mit wenigstens einem Kontaktelement (10) ausgerüstet ist, das eingerichtet ist, bei der Installation der Abzweigvorrichtung (6) in die Durchgangsleitung (4) einzudringen und die Ader zu kontaktieren.

3. Elektrische Installation (2) nach einem der Ansprüche 1 oder 2, wobei die Abzweigvorrichtung (6) eingerichtet ist, im Brandfall durch feuerbeständige isolierende Teile einen elektrischen Kurzschluss zwischen verschiedenen Adern der Durchgangsleitung (4) zu vermeiden.

4. Elektrische Installation (2) nach einem der Ansprüche 1 bis 3, wobei die Abzweigvorrichtung (6) mit jeweils einer Trennvorrichtung (9) für Hin- und Rückleiter der Abzweigleitung (5) ausgerüstet ist.

5. Elektrische Installation (2) nach einem der Ansprüche 1 bis 4, wobei der vorbestimmte brandtypische Wert 150 °C beträgt.

6. Elektrische Installation (2) nach einem der Ansprüche 1 bis 5, wobei an der Durchgangsleitung (4) bis zu 10, 50, 100, 200, 500 oder mehr jeweils zueinander beabstandete Abzweigvorrichtungen (6) angeordnet sind.

7. Elektrische Installation (2) nach einem der Ansprüche 1 bis 6, wobei die Durchgangsleitung (4) mehrere Abschnitte aufweist, wobei an diesen Abschnitten mehreren Abzweigvorrichtungen (6) angeschlossen sind, wobei an diesen Abzweigvorrichtungen (6) jeweils wenigstens eine Abzweigleitung (5) angeschlossen ist und wobei an der Abzweigleitung zumindest ein Verbraucher (3) angeschlossen ist, und
wobei die Abschnitte jeweils separat überstromabgesichert sind, sodass die Verbraucher (3) eines Abschnitts gemeinsam überstromabgesichert sind.

8. Installationssatz für eine elektrische Installation mit Funktionserhalt im Brandfall nach einem der vorhergehenden Ansprüche.

9. Installationssatz nach Anspruch 8, wobei die Länge der Abzweigleitung (5) höchstens 4 m beträgt.

## Claims

1. Electrical installation (2) with maintenance of operation in the event of a fire, comprising
at least one passage line (4), which can be led along an elongated hollow space (1), such as a tunnel or a building corridor, and which has, for the maintenance of operation in the event of a fire, a ribbon cable having a plurality of cores running in parallel alongside one another in a plane, wherein the ribbon cable is provided with a fire-resistant insulation, which keeps the cores at a distance even under the influence of fire,
branch lines (5), which supply power to safety-relevant loads (3), such as lights or fans, arranged in distributed fashion along in the hollow space (1), wherein a plurality of branch apparatuses (6), which are apparatuses for the tapping, without stripping, of the cores of the ribbon cable, are connected to the passage line (4), wherein at least one branch line (5) is connected in each case to said branch apparatuses (6) and wherein at least one load (3) is connected to the branch line (5),
wherein the safety-relevant loads (3) have a lower maintenance-of-operation period than the passage line (4),
wherein the branch apparatuses (6) are provided, for the maintenance of operation of the passage line (4) in the event of a fire, with a thermally triggering isolating apparatus (9), which is configured to automatically isolate the electrical connection between the branch line (5) and the passage line (4) when the ambient temperature increases in the case of a predetermined value typical of fire, a so-called isolation temperature, in order to protect the passage line (4) against a short circuit in a branch line (5) in the event of a fire by virtue of a branch line (5) being isolated automatically from the passage line (4),
wherein the branch lines (5) have a lower maintenance-of-operation period than the passage line (4), **characterized in that**
the isolating apparatus (9) is configured, after a thermally triggered isolation, to re-establish the electrical connection when the ambient temperature decreases to a value below the isolation temperature.

2. Electrical installation (2) according to Claim 1,
wherein the branch apparatus (6) encompasses the passage line (4) and is provided with at least one contact element (10) for each core that is to be tapped, which contact element is configured to penetrate into the passage line (4) and to make contact with the cores during the installation of the branch apparatus (6).

3. Electrical installation (2) according to either of Claims 1 and 2, wherein the branch apparatus (6) is configured to prevent an electrical short circuit between different cores of the passage line (4) in the event of a fire by way of fire-resistance isolating parts.

4. Electrical installation (2) according to one of Claims 1 to 3, wherein the branch apparatus (6) is provided in each case with an isolating apparatus (9) for forward and reverse conductors of the branch line (5).

5. Electrical installation (2) according to one of Claims 1 to 4, wherein the predetermined value typical of fire is 150°C.

6. Electrical installation (2) according to one of Claims 1 to 5, wherein up to 10, 50, 100, 200, 500 or more branch apparatuses (6) that are each spaced apart from one another are arranged on the passage line (4).

7. Electrical installation (2) according to one of Claims 1 to 6, wherein the passage line (4) has a plurality of sections, wherein a plurality of branch apparatuses (6) are connected to said sections, wherein in each case at least one branch line (5) is connected to said branch apparatuses (6) and wherein at least one load (3) is connected to the branch line, and
wherein the sections are each secured against overcurrent separately so that the loads (3) of a section are jointly secured against overcurrent.

8. Installation kit for an electrical installation with maintenance of operation in the event of a fire according to one of the preceding claims.

9. Installation kit according to Claim 8, wherein the length of the branch line (5) is no more than 4 m.

## Revendications

1. Installation électrique (2) avec maintien de fonction en cas d'incendie, comprenant
au moins une ligne traversante (4), qui peut être guidée le long d'une cavité allongée (1), tel un tunnel ou un couloir de bâtiment, et qui présente pour le maintien de fonction en cas d'incendie, un câble plat avec plusieurs brins s'étendant parallèlement l'un à côté de l'autre dans un plan, dans laquelle le câble plat est équipé d'une isolation résistante au feu, laquelle maintient les brins à distance même sous l'influence d'un incendie,
des dérivations (5), qui alimentent des consommateurs (3) importants du point de vue de la sécurité répartis le long de la cavité (1), telles des lampes ou une soufflante, dans laquelle plusieurs dispositifs de dérivation (6), qui sont des dispositifs pour la prise sans dénudage des brins du câble plat, sont raccordés à la ligne traversante (4), dans laquelle respectivement au moins une dérivation (5) est raccordée à ces dispositifs de dérivation (6) et dans laquelle au moins un consommateur (3) est raccordé à la dérivation (5),
dans laquelle les consommateurs (3) importants du point de vue de la sécurité présentent une durée de maintien de fonction inférieure à celle de la ligne traversante (4),
dans laquelle les dispositifs de dérivation (6) sont équipés, pour le maintien de fonction de la ligne traversante (4) en cas d'incendie, d'un dispositif de coupure à déclenchement thermique (9), qui est aménagé pour couper automatiquement le raccordement électrique entre la dérivation (5) et la ligne traversante (4) lors de l'augmentation de la température ambiante pour une valeur prédéterminée propre à un incendie, une température dite de coupure, afin de protéger la ligne traversant (4) contre un court-circuit dans une dérivation (5) en cas d'incendie, par le fait qu'une dérivation (5) est coupée automatiquement de la ligne traversante (4),
dans laquelle les dérivations (5) présentent une durée de maintien de fonction inférieure à celle de la ligne traversante (4), **caractérisé en ce que**
le dispositif de coupure (9) est aménagé pour rétablir le raccordement électrique après une coupure par déclenchement thermique lors de la diminution de la température ambiante à une valeur inférieure à la température de coupure.

2. Installation électrique (2) selon la revendication 1,
dans laquelle le dispositif de dérivation (6) entoure la ligne traversante (4) et est équipé d'au moins un élément de contact (10) par brin à brancher, qui est aménagé pour pénétrer dans la ligne traversante (4) dans l'installation du dispositif de dérivation (6) et pour entrer en contact avec les brins.

3. Installation électrique (2) selon l'une quelconque des revendications 1 ou 2, dans laquelle le dispositif de dérivation (6) est aménagé pour éviter en cas d'incendie un court-circuit entre différents brins de la ligne traversante (4) par des pièces isolantes résistantes au feu.

4. Installation électrique (2) selon l'une quelconque des revendications 1 à 3, dans laquelle le dispositif de dérivation (6) est équipé de respectivement un dispositif de coupure (9) pour conducteur d'amenée et de retour de la dérivation (5).

5. Installation électrique (2) selon l'une quelconque des revendications 1 à 4, dans laquelle la valeur prédéterminée propre à un incendie est de 150 °C.

6. Installation électrique (2) selon l'une quelconque des revendications 1 à 5, dans laquelle jusqu'à 10, 50, 100, 200, 500 ou plus dispositifs de dérivation (6) espacés respectivement l'un par rapport à l'autre sont agencés au niveau de la ligne traversante (4).

7. Installation électrique (2) selon l'une quelconque des revendications 1 à 6, dans laquelle la ligne traversante (4) présente plusieurs sections, dans laquelle plusieurs dispositifs de dérivation (6) sont raccordés au niveau de ces sections, dans laquelle respectivement au moins une dérivation (5) est raccordée au niveau de ces dispositifs de dérivation (6) et dans laquelle au moins un consommateur (3) est raccordé au niveau de la dérivation, et
dans laquelle les sections sont protégées respectivement séparément contre la surintensité, si bien que les consommateurs (3) d'une section sont protégés ensemble contre la surintensité.

8. Ensemble d'installation pour une installation électrique avec maintien de fonction en cas d'incendie selon l'une quelconque des revendications précédentes.

9. Ensemble d'installation selon la revendication 8,
dans lequel la longueur de la dérivation (5) est au maximum de 4 m.
